# EUROPÄISCHE PATENTSCHRIFT

(11) **EP 2 411 577 B1**
(45) Veröffentlichungstag und Bekanntmachung des Hinweises auf die Patenterteilung: **16.01.2013**
(21) Anmeldenummer: 10705351.4
(22) Anmeldetag: 24.02.2010
(51) Int. Cl.: D21D 5/16, D21B 1/34

(54) **SIEB**
SCREEN
TAMIS

(30) Priorität: 27.03.2009 DE 102009015405
(43) Veröffentlichungstag der Anmeldung: 01.02.2012
(73) Patentinhaber: Voith Patent GmbH, 89522 Heidenheim (DE)
(72) Erfinder: LANGE, Werner, 89564 Nattheim (DE)
(86) Internationale Anmeldenummer: PCT/EP2010/052312
(87) Internationale Veröffentlichungsnummer: WO 2010/108746

(56) Entgegenhaltungen:
- WO-A1-03/033152
- DE-U1- 29 608 938
- US-A- 4 717 471

## Beschreibung

Die Erfindung betrifft ein Sieb zur Behandlung einer zur Herstellung einer Papier-, Karton-, Tissue- oder einer anderen Faserstoffbahn geeigneten Faserstoffsuspension mit einer Vielzahl von Sieböffnungen, deren minimalste Querschnittsfläche etwa gleich groß ist.

Derartige Siebe werden vorzugsweise zur Nasssiebung von Faserstoffsuspensionen verwendet, um darin vorhandene Störstoffe zu entfernen. Sie sind in der Regel starr und unterscheiden sich dadurch von flexiblen Endlossieben, die in Siebpressen und Papiermaschinen verwendet werden.
Die Charakteristik eines solchen Siebes ergibt sich im Wesentlichen aus Größe, Form und Anzahl der sich darin befindenden Sieböffnungen. Diese werden in der Regel kleiner gehalten als die auszusiebenden Stoffe.

Verwendet werden solche Siebe mit Vorteil z. B. in Stofflösem, Sekundärstofflösern und Sortierern zur Aufbereitung von Papierfasersuspensionen, wobei sie die Aufgabe haben, Störstoffe zurückzuhalten.

Für Anwendungsfälle, die sich besonders in der Papier- und Zellstoffindustrie ergeben, sollen derartige Siebe eine Sortiercharakteristik haben, die z. B. durch runde Öffnungen zwischen 1 und 30 mm, je nach Grobheit der Stoffe, erreichbar ist.

Natürlich ist man auch bestrebt, durch derartige Siebe einen möglichst großen Durchsatz zu ermöglichen, d. h. eine möglichst große Menge von nicht abgewiesenen Stoffen soll die Öffnungen passieren. Das lässt sich dadurch fördern, dass möglichst viele Öffnungen vorhanden sind. Gesamthaft ausgedrückt, bemüht man sich um eine möglichst große freie Siebfläche, bezogen auf die gesamte Oberfläche des Siebelementes. In der US-A-4 717 471 wird hierzu vorgeschlagen alle Sieböffnungen in gleichem Umfang zur Einlaufseite hin zu erweitern, wobei sie sich überlappen.

Eine weitere Forderung ist eine relativ hohe Festigkeit gegen hydraulischen Druck. Solche Siebelemente werden in einem Produktionsbetrieb eingesetzt, bei dem es auch einmal zu Störungen kommt, was zu unterschiedlicher und beträchtlicher Druckbelastung der Siebelemente führt. Da sich eine Verstopfung nicht immer ausschließen lässt, können durchaus hohe Drücke und bei den entsprechend großen Flächen auch hohe Kräfte auf die Oberfläche solcher Siebelemente wirken. Diese erhöhten Kräfte müssen durch das Sieb aufgenommen werden können, ohne dass eine Beschädigung eintritt.

Die Aufgabe der Erfindung ist es daher, die Sortierwirkung und/oder den Durchsatz bei Gewährleistung der erforderlichen Siebstabilität zu verbessern.

Erfindungsgemäß wurde die Aufgabe dadurch gelöst, dass die einlaufseitige Querschnittsfläche der Sieböffnungen unterschiedlich groß ist.
Hierdurch gelingt es mit relativ geringem Aufwand, die offene Fläche des Siebes durch eine relativ kompakte Anordnung der Sieböffnungen zu vergrößern, ohne die Stabilität des Siebes wesentlich zu beeinträchtigen.
Dies führt zu einer Erhöhung des Durchsatzes, was sich positiv auf den Energieverbrauch auswirkt.
Die Erfindung ermöglicht bei gleichem Durchsatz aber auch kleinere minimale Sieböffnungen zur Verbesserung der Sortierwirkung.

Siebe, die zur Behandlung von Faserstoffsuspensionen verwendet werden sollen, müssen aus Festigkeitsgründen eine ausreichende Wandstärke (Dicke) haben.
Insbesondere bei dem hier besonders typischen Größenbereich für die Sieböffnungen, der z. B. zwischen 1 und 20 Millimeter liegt, können besonders günstige Verfahren, wie Stanzen oder Laserschneiden, eingesetzt werden. Das verursacht in der Regel weniger Kosten als sie beim Bohren entstehen.
Weitere Verfahren zur Erzeugung der Öffnungen sind: Fräsen, Wasserstrahlschneiden, Ätzen, Erodieren, elektrochemisches Bohren, Fliesslochformen oder Räumen.
Dabei lassen sich leicht auch Sieböffnungen erzeugen, deren Querschnitte nicht rotationssymmetrisch sind: z. B. Langlöcher, Rechtecke, Rauten, Sechsecke oder sonstige Polygone mit abgerundeten Ecken. Das kann bei der Nasssiebung von Faserstoffsuspensionen besondere Vorteile bieten.

Bei vielen Anwendungen ist es ebenso von Vorteil, dass sich die Sieböffnungen in Durchströmrichtung der zu siebenden Flüssigkeit erweitern.
Das kann bei zylindrischen Löchern oder auch bei davon abweichenden Querschnitten durchgeführt werden.

Um eine ausreichende Wirkung zu erreichen, sollte sich ein Teil, vorzugsweise etwa die Hälfte der Sieböffnungen zur Einlaufseite vorzugsweise konisch erweitern.
Es können aber auch sprunghafte Erweiterungen gebildet werden.
Hierdurch werden die Turbulenzen an der Einlaufseite des Siebes verstärkt, was zu einer Erhöhung des Durchsatzes führt. Daher kann auf zusätzliche Turbulenzerzeuger auf der Sieboberfläche, beispielsweise in Form von Störleisten, verzichtet werden, wodurch sich Kosten- und Energieeinsparungen ergeben.

Im Interesse eines minimalen Herstellungsaufwand sollte bei einem Teil, vorzugsweise der Hälfte der Sieböffnungen die Einlaufseite zylindrisch ausgebildet sein.

Oft ist es dabei bezüglich der Herstellung und der Sortierwirkung von Vorteil, wenn die Sieböffnungen einen kreisrunden Querschnitt aufweisen.
Für die meisten Anwendungen ist es vorteilhaft, wenn die minimalste Querschnittsfläche der Sieböffnungen zwischen 0,5 und 700 mm², vorzugsweise zwischen 3 und 300 mm² liegt.

Des Weiteren sollten die Sieböffnungen regelmäßig, vorzugsweise in mehreren parallelen Reihen von nebeneinander liegenden Sieböffnungen angeordnet sein. Für eine umfassende Wirkung der konischen Sieböffnungen ist es dabei von Vorteil, wenn sich Sieböffnungen mit zylindrischer und konischer Einlaufseite in einer Reihe abwechseln und/oder die Sieböffnungen in senkrecht zueinander verlaufenden Reihen von nebeneinander liegenden Sieböffnungen angeordnet sind.

Damit die konischen Sieböffnungen effektiv wirken, ist es vorteilhaft, wenn sich die Querschnittsfläche der konischen Sieböffnungen um 100 bis 400 %, vorzugsweise um 200 bis 300 % zur Einlaufseite erweitert und/oder die Tiefe des Konus der Sieböffnungen auf der Einlaufseite zwischen 0,5 und 5 mm liegt.

Typischerweise sind derartige Siebe eben, es sind aber beispielsweise auch zylindrische Siebkörbe möglich.

Nachfolgend soll die Erfindung an einem Ausführungsbeispiel näher erläutert werden. In der beigefügten Zeichnung zeigt:
Figur 1: eine Draufsicht auf einen Siebausschnitt und
Figur 2: einen Teilquerschnitt durch ein Sieb.

Das Sieb kann aus einer oder mehreren Schichten bestehen, wobei vorzugsweise verschleißfeste Materialien, insbesondere Metall zum Einsatz gelangen.

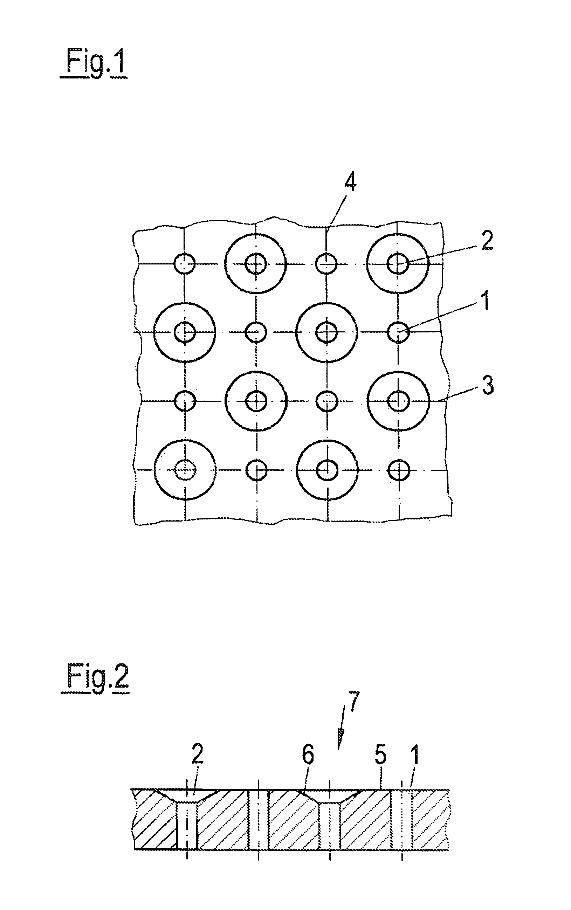

Wie in Figur 1 zu sehen, sind die Sieböffnungen 1,2 in mehreren, parallelen Reihen angeordnet, wobei die Sieböffnungen 1,2 hier waagerechte Reihen 3 und gleichzeitig auch senkrecht verlaufende Reihen 4 bilden.
Durch diese Anordnung haben alle benachbarten Sieböffnungen 1,2 den gleichen Abstand zueinander, was eine effektive Ausnutzung der Siebfläche bei hoher Stabilität gewährleistet.

Dabei besitzt das Sieb kreisrunde Sieböffnungen 1, deren Einlaufseite 5 zylindrisch ausgebildet ist und kreisrunde Sieböffnungen 2, die sich zur Einlaufseite 5 konisch erweitern.
Die konische Erweiterung vergrößert die Turbulenzen an der Sieboberfläche und verbessert so den Durchsatz.
Um diese Wirkung bei möglichst großer offener Fläche des Siebes zu erreichen, wechseln sich konische und zylindrische Sieböffnungen 1,2 in einer Reihen 3,4 ab.

Das hier, wie in Figur 2 zu sehen, beispielhaft ebene Sieb wird von der Einlaufseite 5 her von der Faserstoffsuspension durchströmt. Größere Störstoffe werden dabei zurückgehalten und können auf der Einlaufseite 5 beispielsweise mit einem Räumer entfernt werden.

Während die Dicke des Siebes hier zwischen 6 und 30 mm liegt, hat der Konus 6 der Sieböffnungen 2 eine Tiefe von 0,5 bis 5 mm. Der für die Sortierwirkung entscheidende kleinste Durchmesser der Sieböffnungen 1,2 liegt zwischen 0,8 und 30 mm.

Die zylindrischen Sieböffnungen 1 haben bei der Ausführung gemäß Figur 2 über die gesamte Dicke des Siebes den gleichen, zylindrischen Querschnitt. Bei Bedarf kann dieser aber zur Auslaufseite vergrößert werden.

Auch bei den konischen Sieböffnungen 2 schließt sich in Strömungsrichtung 7 nach dem Konus 6 ein zylindrischer Abschnitt an, der ebenso vergrößert werden kann.

## Patentansprüche

1. Sieb zur Behandlung einer zur Herstellung einer Papier-, Karton-, Tissue- oder einer anderen Faserstoffbahn geeigneten Faserstoffsuspension mit einer Vielzahl von Sieböffnungen (1,2) deren minimalste Querschnittsfläche etwa gleich groß ist, **dadurch gekennzeichnet, dass** die einlaufseitige Querschnittsfläche der Sieböffnungen (1,2) unterschiedlich groß ist.

2. Sieb nach Anspruch 1, **dadurch gekennzeichnet, dass** sich ein Teil, vorzugsweise etwa die Hälfte der Sieböffnungen (2) zur Einlaufseite (5) vorzugsweise konisch erweitert.

3. Sieb nach Anspruch 1 oder 2, **dadurch gekennzeichnet, dass** bei einem Teil, vorzugsweise der Hälfte der Sieböffnungen (1) die Einlaufseite (5) zylindrisch ausgebildet ist.

4. Sieb nach einem der vorhergehenden Ansprüche, **dadurch gekennzeichnet, dass** die Sieböffnungen (1,2) einen kreisrunden Querschnitt aufweisen.

5. Sieb nach einem der vorhergehenden Ansprüche, **dadurch gekennzeichnet, dass** die minimalste Querschnittsfläche der Sieböffnungen (1,2) zwischen 0,5 und 700 mm², vorzugsweise zwischen 3 und 300 mm² liegt.

6. Sieb nach einem der vorhergehenden Ansprüche, **dadurch gekennzeichnet, dass** die Sieböffnungen (1,2) regelmäßig, vorzugsweise in mehreren parallelen Reihen (3,4) von nebeneinander liegenden Sieböffnungen (1,2) angeordnet sind.

7. Sieb nach Anspruch 6, **dadurch gekennzeichnet, dass** sich Sieböffnungen (1,2) mit zylindrischer und konischer Einlaufseite (5) in einer Reihe (3,4) abwechseln.

8. Sieb nach Anspruch 6 oder 7, **dadurch gekennzeichnet, dass** die Sieböffnungen (1,2) in senkrecht zueinander verlaufenden Reihen (3,4) von nebeneinander liegenden Sieböffnungen (1,2) angeordnet sind.

9. Sieb nach einem der Ansprüche 2 bis 8, **dadurch gekennzeichnet, dass** sich die Querschnittsfläche der konischen Sieböffnungen (2) um 100 bis 400 %, vorzugsweise um 200 bis 300 % zur Einlaufseite erweitert.

10. Sieb nach einem der vorhergehenden Ansprüche, **dadurch gekennzeichnet, dass** die Dicke des Siebes zwischen 6 und 30 mm liegt.

11. Sieb nach einem der Ansprüche 2 bis 10, **dadurch gekennzeichnet, dass** die Tiefe des Konus (6) der Sieböffnungen (2) auf der Einlaufseite (5) zwischen 0,5 und 5 mm liegt.

## Claims

1. Screen for treating a fibrous material suspension suitable for producing a paper, board, tissue or other fibrous web, having a multiplicity of screen openings (1, 2), of which the smallest cross-sectional area is of approximately the same size,
**characterized in that**
the cross-sectional area of the screen openings (1, 2) on the inlet side is of a different size.

2. Screen according to Claim 1,
**characterized in that** some, preferably approximately half, of the screen openings (2) preferably widen conically towards the inlet side (5).

3. Screen according to Claim 1 or 2,
**characterized in that**
in some, preferably half, of the screen openings (1), the inlet side (5) is formed cylindrically.

4. Screen according to one of the preceding claims,
**characterized in that**
the screen openings (1, 2) have a circular cross section.

5. Screen according to one of the preceding claims,
**characterized in that**
the smallest cross-sectional area of the screen openings (1, 2) lies between 0.5 and 700 mm², preferably between 3 and 300 mm².

6. Screen according to one of the preceding claims,
**characterized in that**
the screen openings (1, 2) are arranged regularly, preferably in a plurality of parallel rows (3, 4) of screen openings (1, 2) lying beside one another.

7. Screen according to Claim 6,
**characterized in that**
screen openings (1, 2) with a cylindrical and conical inlet side (5) alternate in a row (3, 4).

8. Screen according to Claim 6 or 7,
**characterized in that**
the screen openings (1, 2) are arranged in rows (3, 4) extending perpendicular to one another and comprising screen openings (1, 2) lying beside one another.

9. Screen according to one of Claims 2 to 8,
**characterized in that**
the cross-sectional area of the conical screen openings (2) widens by 100 to 400%, preferably by 200 to 300%, towards the inlet side.

10. Screen according to one of the preceding claims,
**characterized in that**
the thickness of the screen lies between 6 and 30 mm.

11. Screen according to one of Claims 2 to 10,
**characterized in that**
the depth of the cone (6) of the screen openings (2) on the inlet side (5) lies between 0.5 and 5 mm.

## Revendications

1. Tamis pour le traitement d'une suspension fibreuse appropriée pour la fabrication d'une bande de papier, carton, papier-tissu ou d'une autre bande fibreuse, comprenant une pluralité d'ouvertures de tamis (1, 2) dont la surface minimale en section transversale est approximativement identique, **caractérisé en ce que** la surface en section transversale du côté de l'entrée des ouvertures de tamis (1, 2) est de taille différente.

2. Tamis selon la revendication 1, **caractérisé en ce qu'**une partie, de préférence approximativement la moitié, des ouvertures de tamis (2) s'élargit de préférence coniquement vers le côté d'entrée (5).

3. Tamis selon la revendication 1 ou 2, **caractérisé en ce que** dans le cas d'une partie, de préférence de la moitié, des ouvertures de tamis (1), le côté d'entrée (5) est réalisé sous forme cylindrique.

4. Tamis selon l'une quelconque des revendications précédentes, **caractérisé en ce que** les ouvertures de tamis (1, 2) présentent une section transversale ronde circulaire.

5. Tamis selon l'une quelconque des revendications précédentes, **caractérisé en ce que** la surface minimale en section transversale des ouvertures de tamis (1, 2) est comprise entre 0,5 et 700 mm², de préférence entre 3 et 300 mm².

6. Tamis selon l'une quelconque des revendications précédentes, **caractérisé en ce que** les ouvertures de tamis (1, 2) sont disposées de manière régulière, de préférence en plusieurs rangées parallèles (3, 4) d'ouvertures de tamis adjacentes (1, 2).

7. Tamis selon la revendication 6, **caractérisé en ce que** des ouvertures de tamis (1, 2) de côté d'entrée (5) cylindrique et de côté conique sont alternées dans une rangée (3, 4).

8. Tamis selon la revendication 6 ou 7, **caractérisé en ce que** les ouvertures de tamis (1, 2) sont disposées en rangées (3, 4) d'ouvertures de tamis (1, 2) adjacentes s'étendant perpendiculairement les unes par rapport aux autres.

9. Tamis selon l'une quelconque des revendications 2 à 8, **caractérisé en ce que** la surface en section transversale des ouvertures de tamis coniques (2) s'élargit de 100 à 400 %, de préférence de 200 à 300 % vers le côté d'entrée.

10. Tamis selon l'une quelconque des revendications précédentes, **caractérisé en ce que** l'épaisseur du tamis est comprise entre 6 et 30 mm.

11. Tamis selon l'une quelconque des revendications 2 à 10, **caractérisé en ce que** la profondeur du cône (6) des ouvertures de tamis (2) sur le côté d'entrée (5) est comprise entre 0,5 et 5 mm.
